# EUROPÄISCHE PATENTSCHRIFT

(11) **EP 2 044 379 B1**
(45) Veröffentlichungstag und Bekanntmachung des Hinweises auf die Patenterteilung: **21.12.2011**
(21) Anmeldenummer: 07786148.2
(22) Anmeldetag: 18.07.2007
(51) Int. Cl.: F28D 19/04

(54) **REGENERATIVER LUFTVORWÄRMER MIT BÜRSTENDICHTUNG**
REGENERATIVE AIR PREHEATER WITH BRUSH SEAL
RÉCHAUFFEUR D'AIR RÉGÉNÉRATIF AVEC JOINT À BALAIS

(30) Priorität: 21.07.2006 DE 102006034483
(43) Veröffentlichungstag der Anmeldung: 08.04.2009
(73) Patentinhaber: Alstom Technology Ltd, 5400 Baden (CH)
(72) Erfinder: Müller, Ulrich, 68535 Edingen-Neckarhausen (DE); Kitzmann, Ewald, 69469 Weinheim (DE); Schüle, Volker, 69181 Leimen (DE)
(74) Vertreter: Hellwig, Tillmann Johannes
(86) Internationale Anmeldenummer: PCT/EP2007/006374
(87) Internationale Veröffentlichungsnummer: WO 2008/009431

(56) Entgegenhaltungen:
- EP-A- 1 584 869
- DE-A1- 1 921 923
- GB-A- 683 282
- GB-A- 1 133 191
- US-A- 2 549 656

## Beschreibung

Die Erfindung betrifft regenerative Luftvorwärmer nach den Oberbegriffen der nebengeordneten Ansprüche 1 und 2. Ein derartiger Luftvorwärmer ist z.B. aus der US-A-2 549 656 bekannt. Regenerative Luftvorwärmer (LUVOs) sind seit Jahrzehnten bekannt und haben sich in der Praxis bewährt. Besonders vorteilhaft ist der so genannte Ljungström-Luftvorwärmer mit einem Rotor, der eine oder mehrere Lagen von Heizblechen aufweist.

Bei einer anderen Bauart, die auch als "Rothemühle"-Bauart bezeichnet wird, umfasst der LUVO einen Stator mit einer oder mehreren Lagen von Heizblechen, ein Gehäuse sowie zwei Drehhauben. Das Gehäuse umfasst mindestens einen Rauchgaseintritt, mindestens einen Luftaustritt, mindestens einen Rauchgasaustritt und mindestens einen Lufteintritt. Die Drehhauben sorgen durch ihre Drehung dafür, dass alle Bereiche des Stators im abwechselnd von Rauchgasen und vorzuwärmender Luft durchströmt werden.

Die Erfindung ist nicht auf bestimmte Bauarten von regenerativer Luftvorwärmer beschränkt, sondern kann beispielsweise auch bei Bisektor-, Trisektor- und konzentrischen Luftvorwärmern mit mehreren Lufteintritten und -austritten sowie mehreren Rauchgaseintritten und -austritten erfolgreich eingesetzt werden.

Den genannten Bauarten von LUVOs ist gemeinsam, dass die aufzuwärmende Luft im Gegenstrom zu den abzukühlenden Rauchgasen durch ein Gehäuse mit mindestens einem Lufteintritt, mindestens einem Luftaustritt, mindestens einem Rauchgaseintritt und mindestens einem Rauchgasaustritt geführt wird. Der Wärmetransport vom Rauchgas auf die Luft erfolgt über die Heizbleche des Rotors bzw. des Stators.

Bei beiden Bauarten von LUVOs sind die Heizbleche, seien sie im Rotor oder im Stator angeordnet, Temperaturschwankungen ausgesetzt. Dies führt dazu, dass sich die Heizbleche und damit der Rotor bzw. der Stator ausdehnen und anschließend wieder zusammenziehen.

Um eine Vermischung der vorzuwärmenden Luft mit dem Rauchgas zu verhindern, sind zwischen dem Rotor und dem Gehäuse bzw. zwischen dem Stator und den Drehhauben Dichtleisten vorgesehen. Wegen der zuvor beschriebenen thermischen Dehnungen ist die Größe des Dichtspalts häufigen Änderungen unterworfen.

Um die Änderungen der Dichtspalte auszugleichen sind in der Praxis sind zwei Nachstelleinrichtungen bekannt. Eine etwas einfachere Ausführungsform, die häufig an der kalten Seite der Luftvorwärmer eingesetzt wird, besteht darin, dass die Dichtleisten manuell eingestellt werden können. Dadurch ist es möglich, einen Dichtspalt fest einzustellen, der jedoch aufgrund der Verwerfungen und Ausdehnungen der rotierenden Oberflächen vergleichsweise groß ist. Infolgedessen ist die Dichtwirkung dieser manuell einstellbaren Dichtleisten begrenzt.

Eine weitere, deutlich aufwendigere Lösung, besteht darin, die Dichtleisten automatisch so nachzuführen, dass stets eine minimale Spaltbreite zwischen der Dichtleiste und dem Bauteil, welches sich relativ zur Dichtleiste bewegt, eingestellt wird. Diese automatische Spaltenweitenregelung ist nicht nur sehr aufwendig, sondern auch fehleranfällig und kann bei bestehenden Luftvorwärmern häufig aus Platzgründen nicht nachgerüstet werden.

Der Erfindung liegt die Aufgabe zugrunde, eine verbesserte Dichtung für regenerative Luftvorwärmer bereitzustellen, die einerseits minimale Spaltweiten erlaubt und andererseits einfach aufgebaut ist. Des Weiteren soll der Platzbedarf der erfindungsgemäßen Dichtung gering sein, so dass die erfindungsgemäße Dichtung auch bei bereits bestehenden Luftvorwärmern problemlos nachgerüstet werden kann.

Diese Aufgabe wird erfindungsgemäß bei einem regenerativen Luftvorwärmer nach dem Oberbegriff des Anspruchs 1 sowie dem Oberbegriff des nebengeordneten Anspruchs 2 dadurch gelöst, dass die Bürstendichtung eine Befestigungsleiste mit einer Nut aufweist, und dass in der Nut Borsten befestigt sind.

Bürstendichtungen werden bspw. mit gutem Erfolg in Dampfturbinen eingesetzt, um die Leckageströme zwischen den verschiedenen Stufen einer Dampfturbine zu verringern. Sie sind einfach aufgebaut, da sie in der Regel lediglich eine Befestigungsleiste umfassen, an denen die Borsten der Bürstendichtung befestigt ist. Die Dichtwirkung wird durch die Vielzahl der dicht nebeneinander angeordneten Borsten erreicht.

Gleichzeitig sind die Borsten jeweils für sich genommen so dünn, dass sie große Verformungen elastisch federnd aufnehmen können, ohne sich bleibend zu verformen. Wenn sich einzelne Borsten während des Betriebs bleibend verformen sollten, dann bleibt die Funktionsfähigkeit der Bürstendichtung dennoch erhalten.

Dadurch ist es möglich, die Spaltweite zwischen der erfindungsgemäßen Bürstendichtung und dem sich relativ zur Bürstendichtung bewegenden Bauteil bis auf null oder auf einen sehr kleinen Wert zu reduzieren.

Wenn es durch Wärmedehnungen des Rotors oder des Stators zum Schleifen der Bürstendichtung auf dem sich relativ zur Bürstendichtung bewegenden Bauteil kommen sollte, ist dies in der Regel unkritisch, da die Borsten der Bürstendichtung ausweichen können, so dass keine Beschädigung an dem abzudichtenden Bauteil auftritt. Des Weiteren verformen sich die Borsten der Bürstendichtung durch ein Anlaufen an einem Bauteil nicht bleibend, sondern federn sobald die Verwerfung dieses Bauteils sich an der Bürstendichtung vorbeibewegt hat, wieder in die ursprüngliche Stellung zurück.

Es hat sich als vorteilhaft erwiesen, wenn die Borsten der Bürstendichtung in einer Befestigungsleiste gehalten werden. Dabei ist es möglich, die Borsten in der Befestigungsleiste kraftschlüssig und/oder stoffschlüssig, insbesondere durch Schweißen zu befestigen.

Die Borsten der erfindungsgemäßen Bürstendichtung können so angeordnet werden, dass sie mit der Richtung der Relativbewegung zwischen den Bürstendichtungen und dem abzudichtenden Bauteil einen Winkel zwischen 90° und 30° einschließen. Wenn die Borsten einen Winkel von 90° mit der Richtung der Relativbewegung des abzudichtenden Bauteils einschließen, ist die erfindungsgemäße Bürstendichtung relativ steif. Durch Schrägstellen der Borsten kann die Steifigkeit der erfindungsgemäßen Bürstendichtung stufenlos eingestellt werden und den Anforderungen an den am Einsatzort vorherrschenden Bedingungen optimal angepasst werden.

Es ist selbstverständlich auch möglich, die Bürstendichtungen manuell oder automatisch nachstellbar auszuführen.

Um den aggressiven und korrosiven Bedingungen, die in einem Luftvorwärmer herrschen, sowie den hohen Temperaturen standhalten zu können, hat es sich als vorteilhaft erwiesen, die Borsten der Bürstendichtungen aus Edelstahl herzustellen. Selbstverständlich sind auch andere korrosionsbeständige und elastisch verformbare Werkstoffe als Material für die Borsten der erfindungsgemäßen Bürstendichtungen einsetzbar.

Um die Bürstendichtungen zu entlasten, können zusätzlich zu den erfindungsgemäßen Bürstendichtungen noch herkömmliche Dichtleisten vorgesehen werden, wobei diese Dichtleisten dann mit einem etwas größeren Dichtspalt ausgeführt werden können, so dass die Montage erleichtert wird und sich die Lebensdauer der Dichtleisten erhöht.

Selbstverständlich kann die erfindungsgemäße Bürstendichtung auch an bestehenden Dichtleisten nachgerüstet werden. Dies ist insbesondere wegen des geringen Bauraumbedarfs nahezu immer möglich. In diesem Fall können die bereits vorhandenen Nachstelleinrichtungen ohne weitere Änderungen übernommen werden. so dass die Nachrüstung mit Bürstendichtungen nicht nur sehr effektiv, sondern auch sehr kostengünstig ist.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen genannten und beschriebenen Merkmale können sowohl einzeln als auch in beliebiger Kombination miteinander erfindungswesentlich sein.

In der Zeichnung zeigen:
- Figur 1: eine schematische Darstellung eines regenerativen Ljungström-Luftvorwärmers im Schnitt,
- Figur 2: eine Draufsicht auf einen Rotor eines regenerativen Luftvorwärmers,
- Figur 3: eine Ausführungsform einer erfindungsgemäßen Bürstendichtung,
- Figur 4: eine schematische Darstellung eines regenerativen Rothemühle-Luftvorwärmers im Schnitt und
- Figur 5: eine Drehhaube mit einer erfindungsgemäßen Bürstendichtung in Explosionsdarstellung.

### Beschreibung der Ausführungsbeispiele

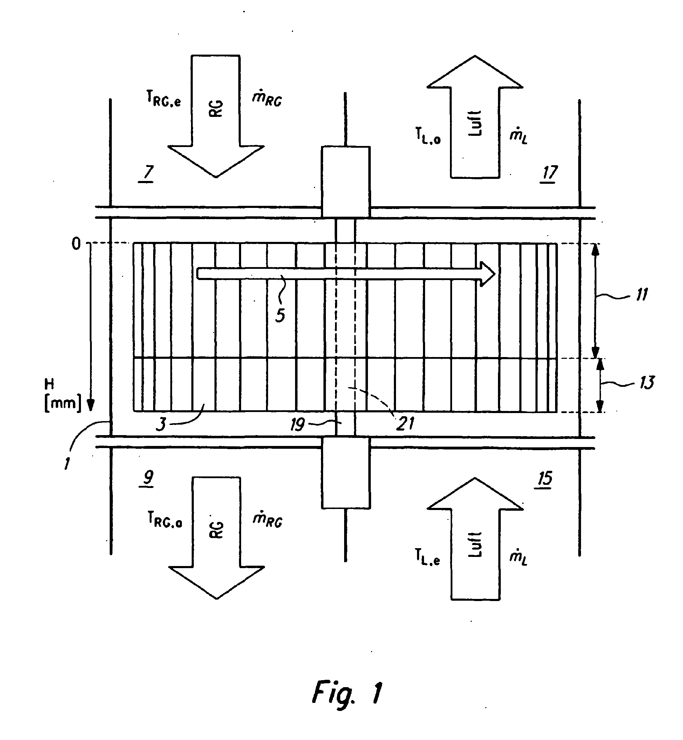

In Figur 1 ist ein regenerativer Luftvorwärmer in einer Seitenansicht mit einem geschnitten dargestellten Gehäuse 1 dargestellt. In dem Gehäuse 1 ist ein Rotor 3 drehbar gelagert. Der Rotor 3 kann über nicht dargestellte Antriebe in Drehung versetzt werden. Die Drehung des Rotors 3 ist in Figur 1 durch einen Pfeil 5 angedeutet.

Die linke Hälfte des Gehäuses 1 wird von Rauchgas (RG) in Richtung der Pfeile durchströmt. Das Rauchgas tritt an einem Rauchgaseintritt 7 in den Luftvorwärmer ein und verlässt diesen an einem Rauchgasaustritt 9. Auf dem Weg vom Rauchgaseintritt 7 zum Rauchgasaustritt 9 durchströmt das Rauchgas den im linken Teil des Gehäuses 1 befindlichen Teil des Rotors 3.

Der Rotor 3 weist bei dem in Figur 1 dargestellten Ausführungsbeispiel 2 Lagen von Heizblechen auf. Im oberen Teil des Rotors 3 ist die so genannte heiße Lage 11 angeordnet. In dem darunter liegenden Teil ist die so genannte kalte Lage 13 angeordnet.

Die heiße Lage 11 und die kalte Lage 13 unterscheiden sich bezüglich ihres Materials, ihrer Oberflächenbeschichtung und Geometrie und sind optimal an die jeweils herrschenden Bedingungen angepasst.

Auf der in Figur 1 rechten Seite des Luftvorwärmers sind ein Lufteintritt 15 und ein Luftaustritt 17 angeordnet. Die Strömungsrichtung der Luft, die am Lufteintritt 15 in den Luftvorwärmer eintritt und ihn am Luftaustritt 17 verlässt, ist der Strömungsrichtung des Rauchgases entgegengesetzt.

Wenn die Rauchgase durch den im linken Teil von Figur 1 befindlichen Teil des Rotors 3 strömen, geben sie Wärme an die Heizbleche des Rotors 3 ab und erwärmen die heiße Lage 11 und die kalte Lage 13 der Heizbleche. Gleichzeitig kühlen sich die Rauchgase ab. Dies bedeutet, dass eine Eintrittstemperatur T_{RG,e} des Rauchgases am Rauchgaseintritt 7 höher als eine Austrittstemperatur T_{RG,a} des Rauchgases am Rauchgasaustritt 9 ist.

Wenn sich die solcherart aufgeheizten Heizbleche durch Drehung des Rotors von dem in Figur 1 linken Teil des Luftvorwärmers in den rechten Teil des Luftvorwärmers bewegen, erwärmen sie die kalte Luft und kühlen sich ab. Dies bedeutet, dass eine Eintrittstemperatur T_{L,e} der Luft am Lufteintritt 15 niedriger ist als eine Austrittstemperatur T_{L,a} der Luft am Luftaustritt 17.

Im Ergebnis wird mit Hilfe des Luftvorwärmers ein Teil der im Rauchgas befindlichen sensiblen Wärme auf die Luft übertragen.

Um eine Vermischung von Rauchgas und Luft zu verhindern, sind zwischen dem linken Teil des Gehäuses 1 und dem rechten Teil des Gehäuses 1 Axialdichtungen 19 und Radialdichtungen 21 vorgesehen.

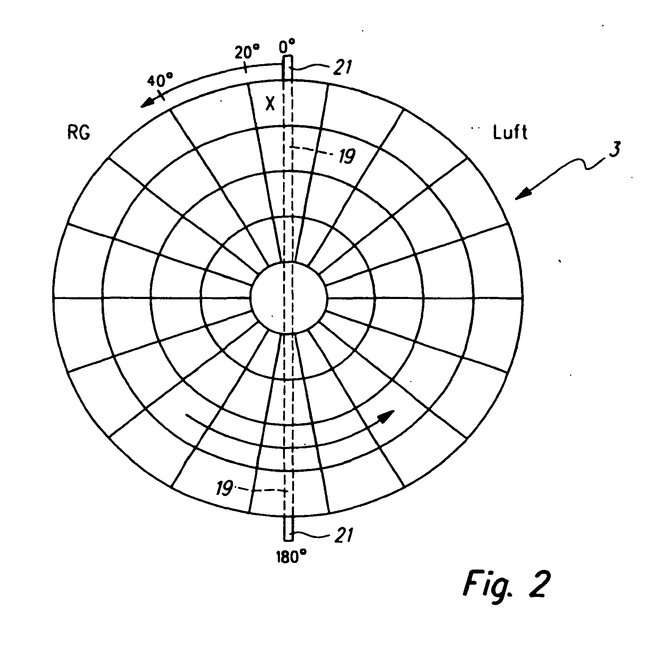

In Figur 2 ist eine Draufsicht auf den Rotor 3 aus Figur 1 dargestellt.

Aus dieser Draufsicht ergibt sich, dass der Rotor 3 aus verschiedenen Sektoren mit Trennwänden (Tangentialwänden) zusammengesetzt ist (ohne Bezugszeichen). In diese Segmente werden die Heizbleche in Behältern (nicht dargestellt) gepackt. Wenn sich nun zum Beispiel das mit einem "X" gekennzeichnete Heizblech beginnend nach der Radialdichtung 19 bei einem Drehwinkel von 0° in den linken Teil des Luftvorwärmers hineindreht, wird es von dem dort vorhandenen Rauchgasstrom umströmt und erwärmt. Dieser Prozess setzt sich fort, bis zum Ende des Gassektors bei einem Drehwinkel von 180°. Dann nämlich verlässt das Segment X den linken Teils des Luftvorwärmers, dreht sich zwischen den Axialdichtungen 19 und den Radialdichtungen 21 hindurch und tritt in den rechten Teil des Luftvorwärmers ein. Dort wird das nunmehr erhitzte Heizblech von der kühlen Luft umströmt und gibt dabei Wärme an die Luft ab. Dieser Vorgang dauert an, bis das Ende des Luftsektors (Drehwinkel > 180° und ≤ 360°) erreicht ist.

Bei den aus dem Stand der Technik bekannten LUVOs sind die Axialdichtungen 19 und Radialdichtungen 21 als starre Dichtleisten ausgeführt, die den Rotor 3 nicht berühren dürfen, da es sonst zu Beschädigungen der Dichtungen 19, 21 und des Rotors 3 kommen kann. Aus diesem Grund muss zwischen den Axialdichtungen 19 und den Radialdichtungen 21 einerseits und dem Rotor 3 andererseits ein Dichtspalt (nicht eingezeichnet in den Figuren 1 und 2) vorhanden sein. Durch diesen Dichtspalt findet eine unerwünschte Vermischung von Rauchgas und Luft statt. Um die Vermischung der Rauchgase und der vorzuwärmenden Luft zu verringern, ist man deshalb bestrebt den Dichtspalt so klein wie möglich zu halten. Dies kann durch manuelle oder automatischen Nachführeinrichtungen erfolgen. Allerdings sind die automatischen Nachführeinrichtungen für die Dichtleisten sehr aufwändig und können auch aus Platzgründen bei vielen bereits in Betrieb befindlichen LUVOs nicht nachgerüstet werden.

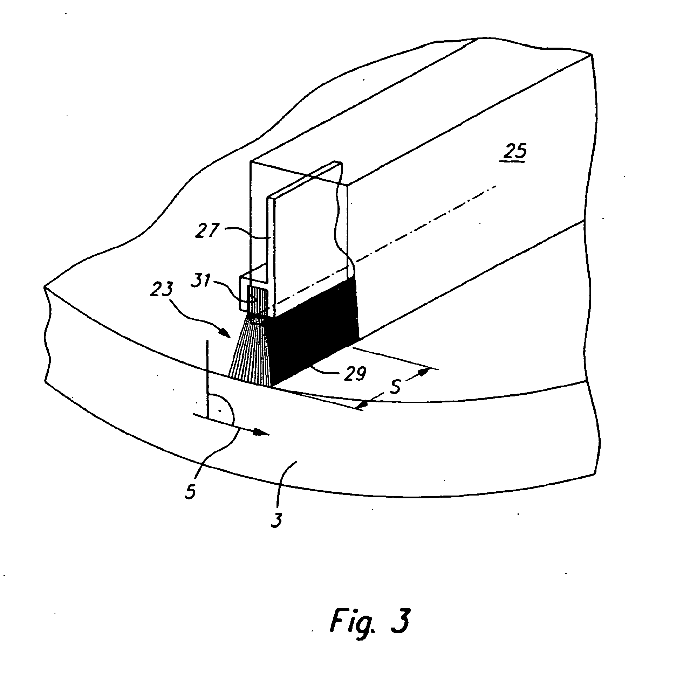

In Figur 3 ist ein Rotor 3 sowie eine erfindungsgemäße Bürstendichtung 23 im Teilschnitt dargestellt.

Bei dem in Figur 3 dargestellten Ausführungsbeispiel wird die erfindungsgemäße Bürstendichtung 23 zur Nachrüstung an einem bestehenden LUVO eingesetzt. In diesem fall wird die erfindungsgemäße Dichtung 23 an eine herkömmliche Dichtleiste 25 angeschraubt. Ein Dichtspalt zwischen Dichtleiste 25 und Rotor 3 ist in Figur 3 mit dem Bezugszeichen "S" versehen. Die Bürstendichtung umfasst eine Befestigungsleiste 27 in die eine Vielzahl von Borsten 29 eingesetzt ist. Es versteht sich von selbst, dass sich die erfindungsgemäße Bürstendichtung 23 über die gesamte Länge der Dichtleiste 25 erstreckt, auch wenn in Figur 3 nur ein kurzes Stück der erfindungsgemäßen Bürstendichtung 23 dargestellt ist.

Wie aus Figur 3 gut ersichtlich ist, hat die Befestigungsleiste 27 in ihrem in Figur 3 unteren Bereich eine Nut 31 in der die Borsten 29 befestigt werden. Die Befestigung der Borsten 29 in der Nut 31 kann bspw. durch Verpressen oder durch Schweißen erfolgen. Wie aus Figur 3 gut ersichtlich ist, überbrückt die erfindungsgemäße Bürstendichtung 23 den Dichtspalt S vollständig, so dass der Leckagestrom zwischen Rauchgas und vorzuwärmender Luft deutlich reduziert wird.

Bei dem in Figur 3 dargestellten Ausführungsbeispiel spannen die Borsten 29 und die Bewegungsrichtung des Rotors, der durch die den Pfeil 5 angedeutet ist, einen Winkel von 90° auf.
Bei Bedarf können die Borsten 29 auch schräggestellt werden.

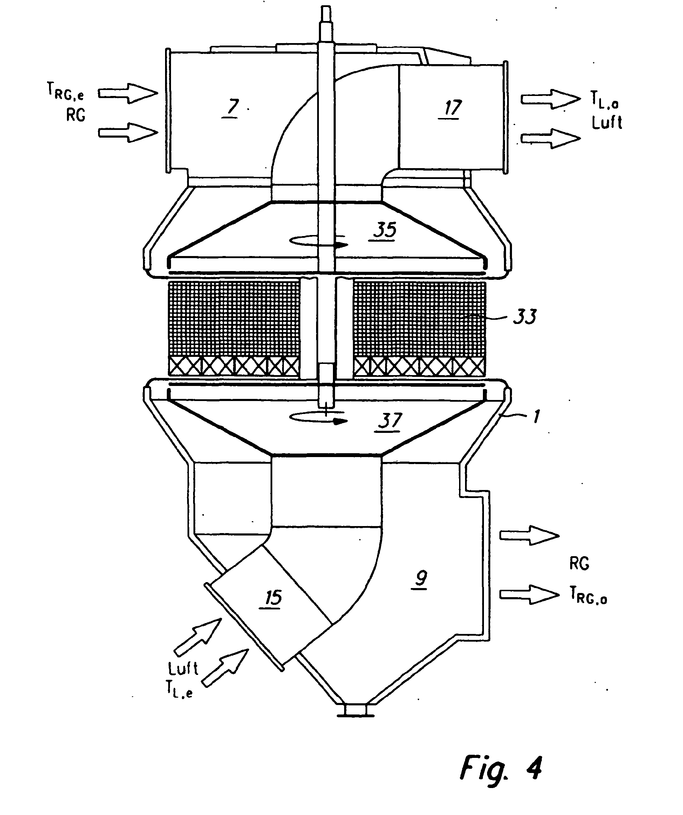

In Figur 4 ist ein regenerativer Luftvorwärmer der Bauart "Rothemühle" mit einem Stator 33, einer ersten Drehhaube 35 und einer zweiten Drehhaube 37 im Schnitt dargestellt.

Der Luftvorwärmer gemäß' Figur 4 weist, ebenso wie der Luftvorwärmer gemäß Figur 1 einen Rauchgaseintritt 7, einen Rauchgasaustritt 9, einen Lufteintritt 15 und einen Luftaustritt 17 auf. Da der Stator 33, der Rauchgaseintritt 7, der Rauchgasaustritt 9, der Lufteintritt 15 und der Luftaustritt 17 ortsfest sind, sorgen die erste Drehhaube 35 und die zweite Drehhaube 37 dafür, dass die Heizbleche des Stators 33 abwechselnd mit Rauchgas und mit vorzuwärmender Luft überstrichen werden. Diese Bauart ist hinlänglich bekannt, so dass auch auf eine detaillierte Beschreibung der Luftführung und der Rauchgasführung im Zusammenhang mit der Erfindung verzichtet werden kann.

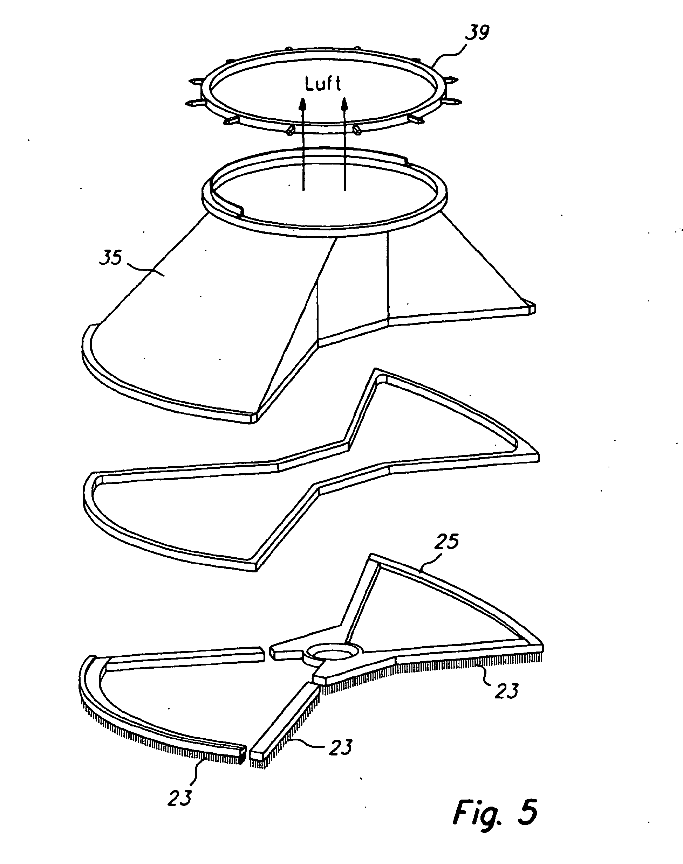

In Figur 5 ist ein Teil einer ersten Drehhaube 35 in einer Explosionsdarstellung dargestellt. Die der obere Teil der in Figur 35 dargestellte Teil der ersten Drehhaube 35 sammelt die durch den Stator 33 geströmte und vorgewärmte Luft und führt sie dem Luftaustritt 17 (nicht dargestellt in Figur 5, siehe Figur 4) zu. Da sich die Drehhaube 35 während des Betriebs dreht, ist am oberen Ende der ersten Drehhaube 35 eine Dichtung 39 vorgesehen. An der in Figur 5 unteren Seite der ersten Drehhaube 35 ist eine Dichtleiste 25 vorgesehen, die in etwa die Form eines Knochens hat. An dieser Dichtleiste 25 wird eine erfindungsgemäße Bürstendichtung 23 befestigt. Bezüglich der Bauweise der erfindungsgemäßen Bürstendichtung 23 wird auf Figur 3 und deren Beschreibung verwiesen.

## Patentansprüche

1. Regenerativer Luftvorwärmer, mit einem Rotor (3), mit einem Gehäuse (1), wobei das Gehäuse (1) mindestens einen Rauchgaseintritt (7), mindestens einen Rauchgasaustritt (9), mindestens einen Lufteintritt (15) und mindestens einen Luftaustritt (17) umfasst, mit Axialdichtungen (19) und Radialdichtungen (21), wobei die Axialdichtungen (19) und die Radialdichtungen (21) die Rauchgase (RG) von der vorzuwärmenden Luft trennen, wobei die Axialdichtungen (19) und/oder die Radialdichtungen (21) als Bürstendichtung (23) ausgebildet sind, **dadurch gekennzeichnet, dass** die Bürstendichtung (23) eine Befestigungsleiste (27) mit einer Nut (31) aufweist, und dass in der Nut (31) Borsten (29) befestigt sind.

2. Regenerativer Luftvorwärmer, mit einem Stator (33), mit einem Gehäuse (1), mit einer ersten Drehhaube (35) und mit einer zweiten Drehhaube (37), wobei die erste Drehhaube (35) eine Verbindung zwischen mindestens einem Rauchgaseintritt (7) und mindestens einem Luftaustritt (17) sowie dem Stator (33) herstellt, wobei die zweite Drehhaube (37) eine Verbindung zwischen mit mindestens einem Rauchgasaustritt (9), mindestens einem Lufteintritt (15) und dem Stator (33) herstellt, wobei die erste Drehhaube (35) und die zweite Drehhaube (37) Axialdichtungen (19) aufweist, wobei die Axialdichtungen (19) die Rauchgase (RG) von der vorzuwärmenden Luft trennen, wobei die Axialdichtungen (19) als Bürstendichtung (23) ausgebildet sind, **dadurch gekennzeichnet, dass** die Bürstendichtung (23) eine Befestigungsleiste (27) mit einer Nut (31) aufweist, und dass in der Nut (31) Borsten (29) befestigt sind.

3. Regenerativer Luftvorwärmer nach einem der vorhergehenden Ansprüche, **dadurch gekennzeichnet, dass** die Borsten (29) der Bürstendichtung (23) an oder in der Befestigungsleiste (27) kraftschlüssig gehalten werden.

4. Regenerativer Luftvorwärmer nach einem der vorhergehenden Ansprüche, **dadurch gekennzeichnet, dass** die Borsten (29) der Bürstendichtung (23) mit der Befestigungsleiste (27) stoffschlüssig , insbesondere durch Schweißen, verbunden sind.

5. Regenerativer Luftvorwärmer nach einem der vorhergehenden Ansprüche, **dadurch gekennzeichnet, dass** die Borsten (29) der Bürstendichtung (23) mit der Richtung der Relativbewegung zwischen Rotor (3) oder Stator (33) einerseits und der Bürstendichtung (23) andererseits einen Winkel zwischen 90° und 30°einschließen.

6. Regenerativer Luftvorwärmer nach einem der vorhergehenden Ansprüche, **dadurch gekennzeichnet, dass** die Bürstendichtungen (23) manuell oder automatisch nachstellbar sind.

7. Regenerativer Luftvorwärmer nach einem der vorhergehenden Ansprüche, **dadurch gekennzeichnet, dass** die Borsten (29) der Bürstendichtung (23) aus Edelstahl, Haynes-25-Legierungen oder Nickel-Cobalt-Legierungen bestehen.

8. Regenerativer Luftvorwärmer nach einem der vorhergehenden Ansprüche, **dadurch gekennzeichnet, dass** zusätzlich zu den erfindungsgemäßen Bürstendichtungen (23) noch konventionelle Dichtungen, insbesondere manuell oder automatisch nachstellbare Dichtleisten (25) vorgesehen sind.

## Claims

1. Regenerative air preheater, with a rotor (3), with a housing (1), the housing (1) comprising at least one flue-gas inlet (7), at least one flue-gas outlet (9), at least one air inlet (15) and at least one air outlet (17), and with axial seals (19) and radial seals (21), the axial seals (19) and radial seals (21) separating the flue gases (RG) from the air to be preheated, the axial seals (19) and/or the radial seals (21) being designed as a brush seal (23), **characterized in that** the brush seal (23) has a fastening strip (27) with a groove (31), and **in that** bristles (29) are fastened in the groove (31).

2. Regenerative air preheater, with a stator (33), with a housing (1), with a first rotary cowl (35) and with a second rotary cowl (37), the first rotary cowl (35) making a connection between at least one flue-gas inlet (7) and at least one air outlet (17) and the stator (33), the second rotary cowl (37) making a connection between at least one flue-gas outlet (9), at least one air inlet (15) and the stator (33), the first rotary cowl (35) and the second rotary cowl (37) having axial seals (19), the axial seals (19) separating the flue gases (RG) from the air to be preheated, the axial seals (19) being designed as a brush seal (23), **characterized in that** the brush seal (23) has a fastening strip (27) with a groove (31), and **in that** bristles (29) are fastened in the groove (31).

3. Regenerative air preheater according to one of the preceding claims, **characterized in that** the bristles (29) of the brush seal (23) are held non-positively on or in the fastening strip (27).

4. Regenerative air preheater according to one of the preceding claims, **characterized in that** the bristles (29) of the brush seal (23) are connected to the fastening strip (27) in a materially integral manner, in particular by welding.

5. Regenerative air preheater according to one of the preceding claims, **characterized in that** the bristles (29) of the brush seal (23) form an angle of between 90° and 30° with the direction of relative movement between the rotor (3) or stator (33), on the one hand, and the brush seal (23), on the other hand.

6. Regenerative air preheater according to one of the preceding claims, **characterized in that** the brush seals (23) are readjustable manually or automatically.

7. Regenerative air preheater according to one of the preceding claims, **characterized in that** the bristles (29) of the brush seal (23) consist of high-grade steel, Haynes-25 alloys or nickel/cobalt alloys.

8. Regenerative air preheater according to one of the preceding claims, **characterized in that**, in addition to the brush seals (23) according to the invention, conventional seals, in particular manually or automatically readjustable sealing strips (25), are also provided.

## Revendications

1. Réchauffeur d'air à régénération, avec un rotor (3), avec une enceinte (1), dans lequel l'enceinte (1) comprend au moins une entrée de gaz de fumées (7), au moins une sortie de gaz de fumées (9), au moins une entrée d'air (15) et au moins une sortie d'air (17), avec des joints d'étanchéité axiaux (19) et des joints d'étanchéité radiaux (21), dans lequel les joints d'étanchéité axiaux (19) et les joints d'étanchéité radiaux (21) séparent les gaz de fumées (RG) de l'air à réchauffer, dans lequel les joints d'étanchéité axiaux (19) et/ou les joints d'étanchéité radiaux (21) se présentent sous la forme de joints à balais (23), **caractérisé en ce que** le joint à balais (23) présente une barrette de fixation (27) avec une rainure (31), et **en ce que** des poils (29) sont fixés dans la rainure (31).

2. Réchauffeur d'air à régénération, avec un stator (33), avec une enceinte (1), avec une première hotte rotative (35) et avec une deuxième hotte rotative (37), dans lequel la première hotte rotative (35) établit une liaison entre au moins une entrée de gaz de fumés (7) et au moins une sortie d'air (17) et le stator (33), dans lequel la deuxième hotte rotative (37) établit une liaison entre au moins une sortie de gaz de fumées (9), au moins une entrée d'air (15) et le stator (33), dans lequel la première hotte rotative (35) et la deuxième hotte rotative (37) présentent des joints d'étanchéité axiaux (19), dans lequel les joints d'étanchéité axiaux (19) séparent les gaz de fumées (RG) de l'air à réchauffer, dans lequel les joints d'étanchéité axiaux (19) se présentent sous la forme de joint à balais (23), **caractérisé en ce que** le joint à balais (23) présente une barrette de fixation (27) avec une rainure (31), et **en ce que** des poils (29) sont fixés dans la rainure (31).

3. Réchauffeur d'air à régénération selon l'une quelconque des revendications précédentes, **caractérisé en ce que** les poils (29) du joint à balais (23) sont retenus par complémentarité de force sur ou dans la barrette de fixation (27).

4. Réchauffeur d'air à régénération selon l'une quelconque des revendications précédentes, **caractérisé en ce que** les poils (29) du joint à balais (23) sont assemblés par continuité de matière, en particulier par soudage, à la barrette de fixation (27).

5. Réchauffeur d'air à régénération selon l'une quelconque des revendications précédentes, **caractérisé en ce que** les poils (29) du joint à balais (23) forment un angle compris entre 90° et 30° avec la direction du mouvement relatif entre le rotor (3) ou le stator (33) d'une part et le joint à balais (23) d'autre part.

6. Réchauffeur d'air à régénération selon l'une quelconque des revendications précédentes, **caractérisé en ce que** les joints à balais (23) sont réglables manuellement ou automatiquement.

7. Réchauffeur d'air à régénération selon l'une quelconque des revendications précédentes, **caractérisé en ce que** les poils (29) du joint à balais (23) sont constitués d'acier allié, d'alliages de Haynes n° 25 ou d'alliages nickel-cobalt.

8. Réchauffeur d'air à régénération selon l'une quelconque des revendications précédentes, **caractérisé en ce qu'**il est encore prévu, en plus des joints à balais selon l'invention (23), des joints d'étanchéité conventionnels, en particulier des barrettes d'étanchéité (25) réglables manuellement ou automatiquement.
